# EUROPEAN PATENT APPLICATION

(11) **EP 1 705 551 A1**
(43) Date of publication of application: **27.09.2006**
(21) Application number: 04820490.3
(22) Date of filing: 12.11.2004
(51) Int. Cl.: G06F 3/033, G06F 3/023

(54) **TRACK BALL DEVICE**

(30) Priority: 16.12.2003 JP 2003418630
(71) Applicant: Matsushita Electric Industries Co., Ltd., Kadoma-shi, Osaka 571-8501 (JP)
(72) Inventor: IISAKA, Atsushi Matsushita El. Ind. Co., Ltd, Chuo-ku, Osaka-shi, Osaka 540-6319 (JP); SAKAMOTO, Kiyomi Matsushita El. Ind. Co., Ltd, Chuo-ku, Osaka-shi, Osaka 540-6319 (JP); YAMASHITA, Atsushi Matsushita El. Ind. Co., Ltd, Chuo-ku, Osaka-shi, Osaka 540-6319 (JP)
(74) Representative: Pautex Schneider, Nicole Véronique
(86) International application number: PCT/JP2004/016858
(87) International publication number: WO 2005/059735

(57) **Abstract**

An object of the present invention is to provide a track ball device capable of storing information in a ball. In a track ball device 1, a ball section 12 has embedded therein at least one non-contact IC chip capable of storing various types of information. In a case 19 of the track ball device 1, at least one reader 21 is provided. The reader 21 communicates with the non-contact IC chip 17 and reads information stored therein.

## Description

### TECHNICAL FIELD

The present invention relates to a track ball device, and more specifically to a track ball device usable by a user to rotate a ball to operate an electronic device.

### BACKGROUND ART

An example of conventional track ball devices generally includes a ball, a resin case for surrounding the ball, a bottom plate for closing a bottom surface of the case, and a lid plate for closing a top surface of the case. A top end of the ball is exposed from a round hall formed in a central portion of the lid plate. The ball is supported, at positions on lines passing through the center of the ball and slightly below a plane parallel to the bottom plate, by four supports which are provided in the case at an intcrval of 90 degrees. Thus, the user can rotate the ball in all the directions.

Theball includes a built-in movable magnetizable member, which includes first through third rods bound together so as to cross one another perpendicularly. The first through third rods are formed of a non-magnetized soft magnetic material. Both of two end surfaces of each rod reach a position close to a surface of the ball. The two end surfaces of each rod are also covered with an insulating film having a high hardness and a small coefficient of friction.

In the case, a pair of fixed magnetic members are fixed on each of two axial lines passing through the center of the ball and crossing each other perpendicularly. Each of the fixed magnetic members is located at a position away from the surface of the ball by a predetermined distance. The fixed magnetic members all have the same polarity as that of the center of the ball (e. g. , N pole), and have a generally equal magnetization amount to one another. The fixed magnetic members are magnetically coupled with the end surfaces of the rods of the movable magnetizable member built in the ball.

For using the track ball device having the above-described structure to move a cursor on a display screen of an electronic device, which is an operation target, in a predetermined direction, the user touches the top end of the ball with his/her hand or finger to rotate the ball in a due direction. The ball is supplied with a rotational force in the operation direction. In accordance with the rotational force, the ball slides on planes formed of the supports in the case, while rotating around a rotation axis, i.e., a front-rear axial line connecting a first pair of fixed magnetic members, against the attracting force supplied from a second pair of fixed magnetic members. When the rotation degree exceeds about 45 degrees, the force of the second fixed magnetic members for attracting the two end surfaces of one of the rods acts more strongly. Thus, the ball spontaneously rotates in a predetermined direction to a position of about 90 degrees, and then stops.

During such a rotation of the ball, the hand or finger of the user feels the rotation heavy or light alternately at each about 90 degrees because of the attracting force, i.e., the magnetic coupling force of the second pair of fixed magnetic members acting on the movable magnetizable member. Thus, the user can obtain clicking sense (see, for example, patent document 1 (Japanese Laid-Open Patent Publication No. 2002-140160)).

### DISCLOSURE OF THE INVENTION

### PROBLEMS TO BE SOLVED BY THE INVENTION

However, the conventional track ball devices have a problem that information cannot be stored in the ball.

Therefore, an object of the present invention is to provide a track ball device capable of storing information in a ball.

### SOLUTION TO THE PROBLEMS

To achieve the above object, one aspect of the present invention is directed to a track ball device, comprising a ball; at least one non-contact IC chip built in the ball; and a reader for reading information stored in the non-contact IC chip.

### EFFECT OF THE INVENTION

According to the above-described aspect, the ball has a built-in non-contact IC chip, and the track ball device includes a reader. Thus, a track ball device capable of obtaining information from the ball can be provided.

The non-contact IC chip stores, for example, information capable of specifying a position of the non-contact IC chip itself or information representing a feature of the ball.

These and other objects, features, aspects and advantages of the present invention will become more apparent from the following detailed description of the present invention when taken in conjunction with the accompanying drawings.

### BRIEF DESCRIPTION OF THE DRAWINGS

[FIG. 1] FIG. 1 is a schematic view of a track ball device 1 according to one embodiment of the present invention and a vicinity thereof.
[FIG. 2] FIG. 2 is a schematic view of the track ball device 1 shown in FIG. 1 when seen vertically from right above.
[FIG. 3] FIG. 3 is a cross-sectional view of the track ball device 1 taken along a transverse central plane A-A' shown in FIG. 2.
[FIG. 4] FIG. 4 is a cross-sectional view of the track ball device 1 taken along a reference plane C-C' shown in FIG. 3.
[FIG. 5] FIG. 5 is a schematic view illustrating data communication between readers 21 and IC chips 17 shown in FIG. 3.
[FIG. 6] FIG. 6 is a schematic view showing a GUI image when an air-conditioning system is an operation target.
[FIG. 7] FIG. 7 is a schematic view showing markings 23 provided on a surface layer 18 shown in FIG. 3.
[FIG. 8] FIG. 8 is a schematic view showing another example of arrangement of the IC chips 17 shown in FIG. 3.

### DESCRIPTION OF THE REFERENCE CHARACTERS

- 1: track ball device
- 12: ball section
- 17: non-contact IC chip
- 19: case
- 21: reader

### BEST MODE FOR CARRYING OUT THE INVENTION

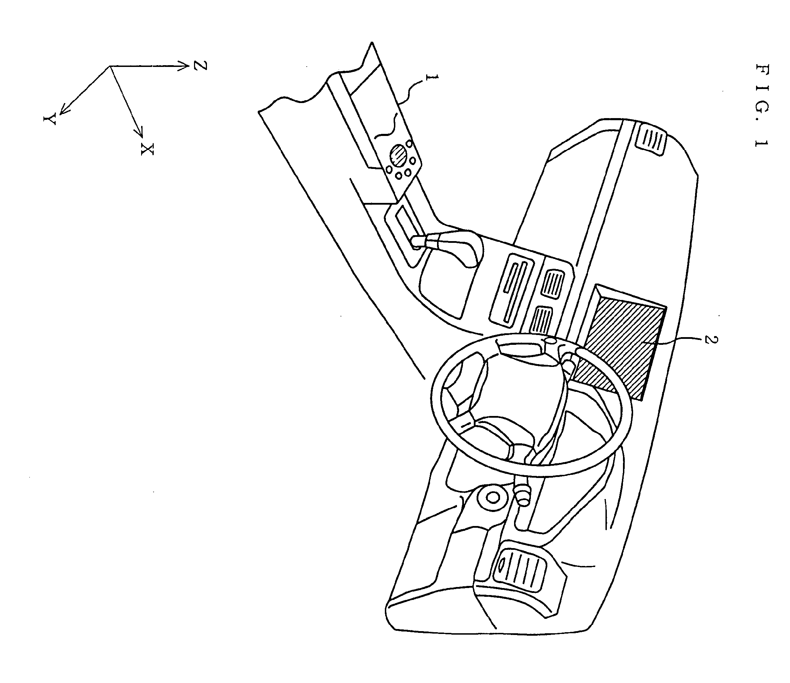

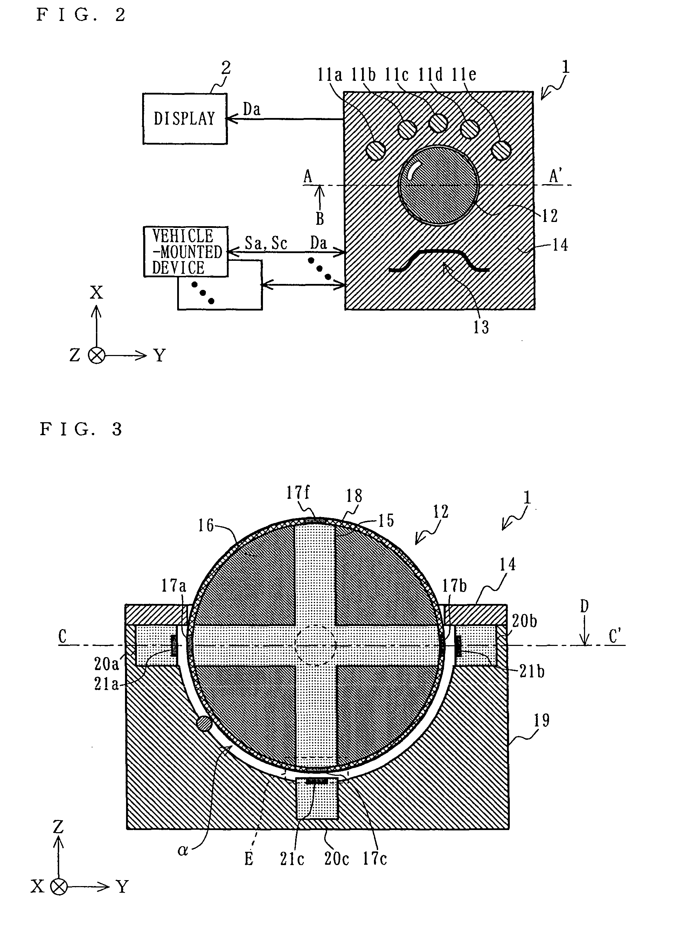

FIG. 1 is a schematic view of a track ball device 1 according to one embodiment of the present invention and a vicinity thereof. FIG. 2 is a schematic view of the track ball device 1 shown in FIG. 1 when seen vertically from right above. First, with reference to FIG. 1, the track ball device 1 is typically installed in an area between a driver's seat of a vehicle and a passenger seat adjacent thereto, so as to be operable by the driver or the passenger (hereinafter, collectively referred to as the "user") with his/her hand. FIG. 1 and FIG. 2 show a three-dimensional cartesian coordinate system for easier understanding of the following description. In the three-dimensional cartesian coordinate system, an X axis typically represents an advancing direction of the vehicle. A Z axis represents the vertical direction, and a Y axis crosses both the X axis and the Z axis perpendicularly.

The track ball device 1 described above transmits a device control signal Sa (see FIG. 2) to each vehicle-mounted device as an operation target such as, for example, a navigation system, an audio system, an air-conditioning systemor a TV receiver. The device control signal Sa is for controlling such a vehicle-mounted device. The track ball device 1 preferably transmits GUI (Graphical User Interface) image data Da for assisting the operation of the vehicle-mounted device as an operation target to a display 2. The GUI image data Da represents a GUI image provided by graphics components, for example, buttons, icons and/or menus. The GUI images are used when the user operates the vehicle-mounted device.

As shown in FIG. 1, the display 2 is installed at a position, in a dashboard of the vehicle, which is easy to see from the user. The display 2 mainly displays a GUI image represented by GUI image data Da (see FIG. 2) transmitted from the track ball device 1.

FIG. 2 shows at least one vehicle-mounted device as an operation target. The vehicle-mounted device operates in accordance with a device control signal Sa transmitted from the track ball device 1. The vehicle-mounted device preferably responds to an image request signal Sc transmitted from the track ball device 1 to return the above-described GUI image data Da.

Next, with reference to FIG. 2, elements provided on a top surface of the track ball device 1 shown in FIG. 1 will be described. As shown in FIG. 2, the top surface of the track ball device 1 has a plurality of buttons 11 (five buttons 11a through 11e are shown in the figure), a ball section 12, a rest section 13, and a top lid 14 provided thereon. The number of buttons is not limited to five and may be set in accordance with the designing specifications of the track ball device 1, especially in accordance with the number of vehicle-mounted device(s) as an operation target(s).

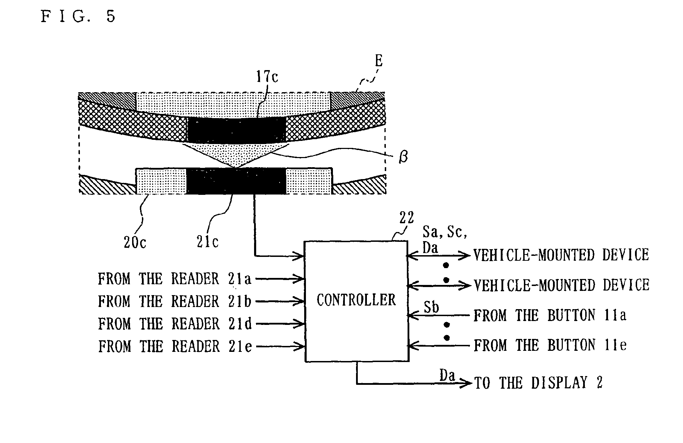

Each button 11 is assigned to a different vehicle-mounted device. For example, the button 11a may be assigned to a navigation device, and the button 11b may be assigned to an air-conditioning system. When wishing to operate a certain vehicle-mounted device, the user presses the button 11 assigned to the certain vehicle-mounted device. In response to the pressing operation by the user, the each button 11 outputs a device specifying signal Sb representing the vehicle-mounted device that the user wishes to operate to a controller 22 (see FIG. 5) of the track ball device 1.

The ball section 12 is generally spherical and is installed to be rotatable in all the directions around the center thereof in accordance with the operation of the user.

The rest section 13 is for the user to place his/her wrist or hand and has a surface shape which is ergonomically designed to allow the user to easily operate the ball.

The top lid 14 is a plate-like member for covering a top part of the track ball device 1. The rest section 13 is formed at an appropriate position of a top surface of the top lid 14. At a generally central position of the top lid 14, a hall is formed and extends so as to pass through the track ball device 1 from the top surface to a bottom surface thereof (hereinafter, the extended part of the hall will be referred to as a "through-hole"). The diameter of the through-hole is smaller than the diameter of the ball 12 by a predetermined distance.

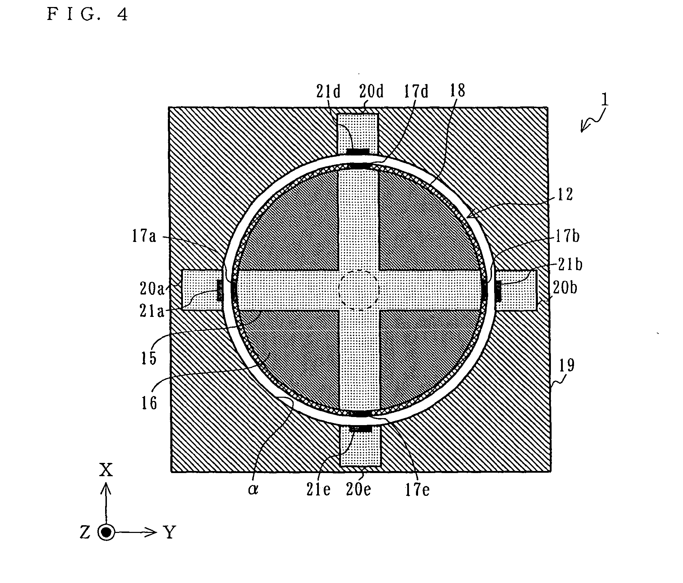

FIG. 3 is a cross-sectional view of the trackball device 1 taken along a transverse central plane A-A' shown in FIG. 2, seen in the direction of arrow B. The transverse central plane A-A' is parallel to the Y-Z plane and includes the center of the ball section 12. FIG. 4 is a cross-sectional view of the track ball device 1 taken along a reference plane C-C' shown in FIG. 3, seen in the direction of arrow D. The reference plane C-C' is parallel to the X-Y plane and includes the center of the ball section 12. The reference plane C-C' is away from a bottom surface of the top lid 14 shown in FIG. 3 by a predetermined distance.

As shown in FIG. 3 and FIG. 4, the ball section 12 includes a movable magnetizable member 15, a resin section 16, a plurality of non-contact IC chips 17, and a surface layer 18.

The movable magnetizable member 15 includes three rods having substantially an equal length. Each rod is formed of a non-magnetized soft magnetic material. The three rods are located and bound together such that axes thereof cross one another perpendicularly.

The resin section 16 is formed of a resin and has the movable magnetizable member 15 built therein. Specifically, the resin section 16 has a generally spherical outer shape, and the intersection of the axes of the three rods matches the center of the resin section 16. The diameter of the resin section 16 is substantially equal to, or greater than, the length of each rod. In FIG. 3 and FIG. 4, the diameter of the resin section 16 is shown to be equal to the length of each rod. In this case, each end surface of each rod is exposed on the resin section 16.

The non-contact IC chips (hereinafter, referred to simply as the "IC chips") 17 are respectively located on the end surfaces of the rods of the movable magnetizable member 15, and store various types of information. In this embodiment, one IC chip is located on each end surface of each rod, for example. Accordingly, as shown in FIG. 3 and FIG. 4, six IC chips 17a through 17f are required. In this embodiment, each IC chip 17 stores, for example, absolute position information of the IC chip 17 itself in the ball section 12, i.e., a combination of longitude information and latitude information of the IC chip 17 itself in the ball section 12.

The surface layer 18 preferably covers a surface of the ball section 12, and is formed of an insulating material having a relatively high hardness and a relatively small coefficient of friction. The surface layer 18 has a thickness which is uniform and is capable of covering all the IC chips 17. Thus, each IC chip 17 is fixed on the respective end surface of the three rods.

The track ball device 1 includes a case 19, a plurality of fixed magnetic members 20, and a plurality of readers 21 in addition to the above-described elements.

In this embodiment, the case 19 has a rectangular parallelepiped outer shape, for example. The case 19 has a generally semi-spherical hall α capable of accommodating the ball section 12. The diameter and the depth of the hall α are larger than the diameter of the ball section 12. Preferably, at least three supports such as projections, bearings or rollers for rotatably supporting the ball section 12 are provided on a surface of the hall α. The top lid 14 is attached to a top surface of the case 19 in the state where the ball section 12 is accommodated in the hall α. As a result, a top portion of the ball 12 is exposed outside from the hall formed in the top lid 14.

The fixed magnetic members 20 are, for example, magnetized at a generally equal magnetization amount to one another and fixed to the case 19. In this embodiment, five fixed magnetic members 16a through 16e are included in the track ball device 1, for example. Specifically, the fixed magnetic members 20a, 20b, 20d and 20e are fixed in the vicinity of the opening of the hall α. More specifically, the fixed magnetic members 20a and 20b are fixed so as to be opposed to each other in the vicinity of a line extended from the diameter of the opening parallel to the Y axis. The fixed magnetic members 20d and 20e are fixed so as to be opposed to each other in the vicinity of a line extended from the diameter of the opening parallel to the X axis. The fixed magnetic member 20c is fixed in the vicinity of the bottom of the hall α. The fixed magnetic members 20a through 20e are preferably fixed at such positions that end surfaces thereof are exposed to the hall α, and that the end surfaces thereof are equally distanced from the surface of the ball section 12 in the case where the ball section 12 is accommodated in the hall α.

Each reader 21 is located in the vicinity of the end surface of each of the fixed magnetic member 20. Accordingly, as shown in FIG. 3 and FIG. 4, five readers 21a through 21e are required. The readers 21 each communicate with any of the IC chips 17 which has come to a position facing the reader 21 itself in a non-contact manner.

FIG. 5 is an enlarged view of a part E shown in FIG. 3 as being surrounded by the dashed line, and is a schematic view illustrating data communication between the readers 21 and the IC chips 17. The IC chip 17 shown in FIG. 5 includes an antenna coil and a communication control section, neither of which is shown. The reader 21 and the IC chip 17 mutually transmit and receive data in a non-contact manner by electromagnetic coupling between the antenna coils thereof. For example, when receiving an instruction or data from the controller 22 included in the track ball device 1, a communication control section of the reader 21 modulates the received instruction or data with a carrier wave signal of a predetermined frequency using an electronic circuit, for example, an input/output circuit or a modulation circuit, included in the communication control section itself, and supplies the modulated signal to the antenna coil of the reader 21 itself. In accordance with this, an electric current is excited in the antenna coil of the IC chip 17, and the IC chip 17 is also supplied with a driving power. Then, the IC chip 17 reproduces the instruction or data from the reader 21 in an electronic circuit, for example, a transmission/receiving circuit or a demodulation circuit, connected to the antenna coil.

Communication from the reader 21 to the IC chip 17 is performed as described above. Communication from the IC chip 17 to the reader 21 is performed in the same manner. In this case, however, the reader 21 needs to supply a driving power to the IC chip 17 or the IC chip needs to have the driving power supplied from the reader 21 in the past accumulated therein.

As shown in FIG. 5, a range β in which the reader 21 can communicate (hereinafter, referred to as a "communication range") is very short such that the reader 21 can communicate with a single IC chip 17. For example, in the case where the diameter of the ball section 12 is 50 mm, an antenna coil having a directivity providing a semi-spherical communication range having a radius of about 5 mm is mounted on the reader 21.

Next, with reference to FIG. 1 through FIG. 5, an operation performed by the user on the track ball device 1 having the above structure will be described. In a state where the user does not operate the ball section 12 (hereinafter, referred to as an "initial state"), each end surface of two pairs of opposing end surfaces of the movable magnetizable member 15 is attracted to either one of the fixed magnetic members 20a, 20b, 20d and 20e by magnetic coupling. One of the remaining two end surfaces of the movable magnetizable member 15 is attracted to the fixed magnetic member 20c by magnetic coupling. Namely, in the initial state, the ball section 12 stops still with each end surface of the movable magnetizable member 15 facing the end surface of either one of the fixed magnetic members 20.

When necessary, the user applies a force to the top portion of the ball section 12 to rotate the ball section 12 in a desired direction. As an example, the case where the user applies a force in the direction of the X axis will be described hereinafter. In this case, the ball section 12 is supplied with a rotational force in the direction of the X axis and thus is rotated in the hall α around the rotation center, which is the axis of the rod of the movable magnetizable member 15 which is provided parallel to the Y axis. Specifically, the state shown in FIG. 3 and FIG. 4 is the initial state. It is assumed that in the initial state, a force in a positive direction of the X axis is applied to the ball section 12. With such an assumption, the ball section 12 starts rotating in the state where each end surface of the rods of the movable magnetizable member 15 which is facing either one of the fixed magnetic members 21c through 21e repels the attracting force. When the ball section 12 has rotated by 45 degrees from the initial state, the fixed magnetic members 21c through 21e respectively attract the approaching end surfaces of the rods. Because of this, the hand or finger of the user feels the rotation of the ball section 12 heavy or light alternately each time the ball section 12 rotates by 90 degrees. In the following description, such a feel will be referred to as clicking sense.

When the ball section 12 is supplied with a force in the direction of the Y axis also, the user obtains substantially the same clicking sense.

When a force is applied in a direction angled with respect to the direction of the X axis or the Y axis, the ball section 12 first rotates in the direction in which the force is applied, but later rotates in the direction of the X axis or the Y axis. Namely, the magnetic members 20 restrict the direction of rotation of the ball section 12.

As is clear from the above, the ball section 12 rotates in the direction of the X axis or the Y axis in order to provide the user with clicking sense. Therefore, when, for example, a force is applied in a positive direction of the Y axis in the state shown in FIG. 3, the contact force between the ball section 12 and the supports provided in the hall α is weakened by the applied force and thus the ball section 12 tends to approach the fixed magnetic member 20b. However, the fixed magnetic member 20c attracts the movable magnetizable member 15, and therefore, the ball section 12 is also supplied with a force in a negative direction of the Y axis. As a result, the distances between the surface of the ball section 12 and the fixed magnetic members 20 are kept substantially equal to one another.

As described above, the track ball device 1 capable of providing the user with clicking sense is realized by incorporating the movable magnetizable member 15 and a plurality of fixedmagnetic members 20.

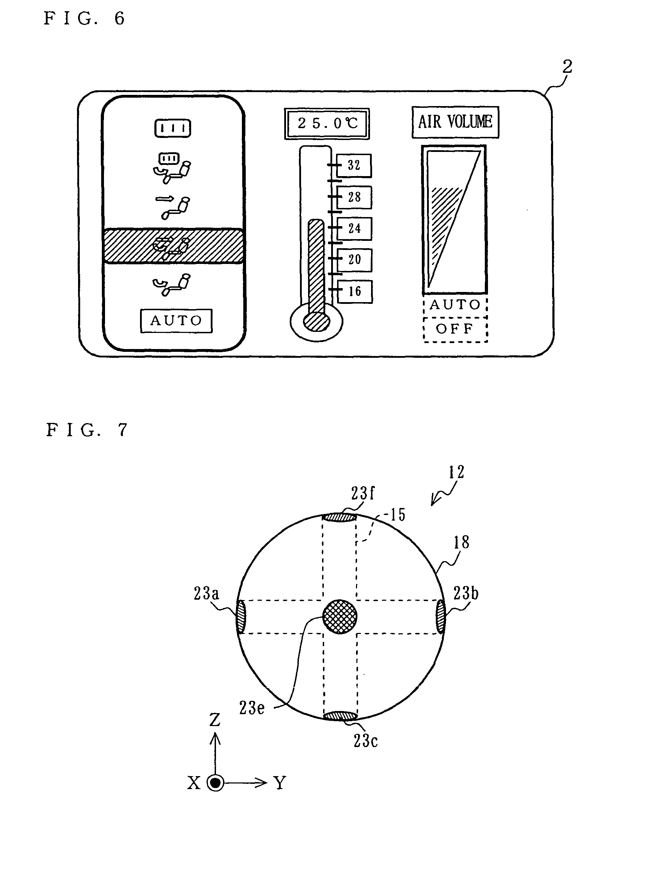

The trackball device 1 includes the movable magnetizable member 15 and a plurality of fixed magnetic members 20. Therefore, in the initial state, each fixed magnetic member 20 faces a different end surface of the rods. When the track ball device 1 is turned on in this initial state, the controller 22 (see FIG. 5) first specifies the vehicle-mounted device assigned to the button operated by the user among the buttons 11a through lle, and then transmits an image request signal Sc (described above) to the vehicle-mounted device as an operation target. In response to the image request signal Sc, the vehicle-mounted device transmits GUI image data Da to the controller 22. The controller 22 transfers the received GUI image data Da to the display 2 (see FIG. 2). As a result, the display 2 displays a GUI image shown in, for example, FIG. 6. FIG. 6 is a schematic view showing a GUI image when the air-conditioning system is the operation target. As shown in FIG. 6, the GUI image has a cursor movable up, down, left and right. An initial position of the cursor is predetermined, and the moving direction and the moving distance are determined in accordance with the rotation direction and the rotation amount of the ball section 12.

After the vehicle-mounted device is specified, at least the reader 21c communicates with the IC chip 17 facing the reader 21c itself to read the position information stored therein, and transmits the position information to the controller 22 (see FIG. 5) . Based on the position information transmitted from the reader 21c, the controller 22 specifies which of the end surfaces of the rods of the movable magnetizable member 15 is directed vertically upward. For example, in the case where the IC chip 17c faces the reader 21c as shown in FIG. 3, the controller 22 specifies that the end surface on which the IC chip 17f is located is directed vertically upward.

Then, the user rotates the ball section 12 by at least 90 degrees when necessary. As a result, the reader 21c faces an IC chip 17 different from the IC chip 17 facing the reader 21c in the initial state. The reader 21c receives position information from the IC chip 17 currently facing the reader 21c in the same manner as described above, and transmits the position information to the controller 22. Based on the position information received previously and the position information received currently, the controller 22 calculates in which direction, i.e., in the direction of the X axis or the Y axis, and by how many degrees, the ball section 12 has rotated. Then, in accordance with the rotation direction and the rotation amount of the ball section 12, the controller 22 determines the moving direction and the moving distance of the cursor on the GUI image, and transmits the determination results to the display 2 as a device control signal Sb. As a result, the cursor moves on the display screen of the display 2 in the direction and by the distance determined by the controller 22.

As described above, the track ball device 1 according to this embodiment can accurately calculate in which direction and how much the ball section 12 has rotated by having each IC chip 17 store its own absolute coordinate position. Specifically, with the conventional track ball device adopting an optical system and a rotary encoder system (patent document 1 described above) , an error may be superimposed on the detected rotation amount. In addition, the conventional track ball device changes the display of the GUI data based on a relative rotation amount of the ball. For these reasons, when the ball is stopped at a specific angle by a magnetic force, the display of the GUI data and the clicking sense of the ball may not match each other. By contrast, according to the track ball device 1 of this embodiment which calculates the rotation amount and the rotation direction of the ball section 12 based on the absolute coordinate position, the display of the GUI data and the clicking sense of the ball match each other.

In the above-described embodiment, each IC chip 17 stores the position information thereof. The present invention is not limited to this, and all the IC chips 17 may preferably store information on a feature of the ball section 12, for example, information representing whether or not an optically readable pattern is printed on the surface of the ball section 12. In the case where such a pattern is printed on the ball section 12 and a light emitting device and a controller for reading such a pattern are mounted on the case 19, the track ball device 1 can act as a known optical track ball device. Alternatively, each IC chip 17 may store information representing whether or not the ball section 12 includes the movable magnetizable member 15. By having such information stored in the IC chip 17, the track ball device 1 may be able to determine that the clicking sense cannot be provided to the user.

Another example of the above-described information is shown in FIG. 7. In the case where an area of the surface layer 18 corresponding to each end surface of the rods of the movable magnetizable member 15 (represented with the dashed line) is provided with a marking 23 of a different color, each IC chip 17 stores color information representing the color of the marking 23 provided on the IC chip 17 facing the IC chip 17 itself. FIG. 7 shows five markings 23a through 23c, 23e and 23f for the sake of convenience. The marking 23d is provided on an area of the surface layer 18 opposed to the marking 23e. In the case where such markings are provided, the controller 22 can allow the display 2 to show the color of the marking 23 currently directed vertically upward. Thus, the user can learn in which direction the ball section 12 is currently oriented using the display 2 installed at an easy-to-see position. In addition, the track ball device 1 can output an audio guidance which advises the user to change the color of the top portion of the ball section 12 from blue to red.

The markings 23 may be provided, as well as in different colors, in different shapes, characters or icons. In such a case, each IC chip 17 stores information representing the shape, character or icon.

In the above description, the user operates the vehicle-mounted device while watching the GUI image. The present invention is not limited to this, and there may be vehicle-mounted devices for which it can be selected to display or not to display GUI images. A car audio system is an example of such vehicle-mounted devices. When the track ball device 1 is turned on in the initial state described above, in the case where the button 11 assigned to the audio system is pressed, the controller 22 (see FIG. 5) determines whether the button 11 has been long-pressed or not.

It is assumed that when the button 11 is long-pressed, the controller 22 determines not to display GUI images. With such an assumption, when the button 11 as a target is long-pressed, the controller 22 does not transmit an image request signal Sc (described above) and controls the audio system in accordance with which portion of the ball section 12 is directed vertically upward. For example, when the marking 23a shown in FIG. 7 is directed upward, the controller 22 controls the audio system to reproduce a CD. When the marking 23b is directed upward, the audio system receives a specific FM broadcast and outputs an audio signal. By allowing such an operation to be performed, even when the display 2 is occupied by another vehicle-mounted device such as, for example, a navigation system, the user can control the audio system using the track ball device 1.

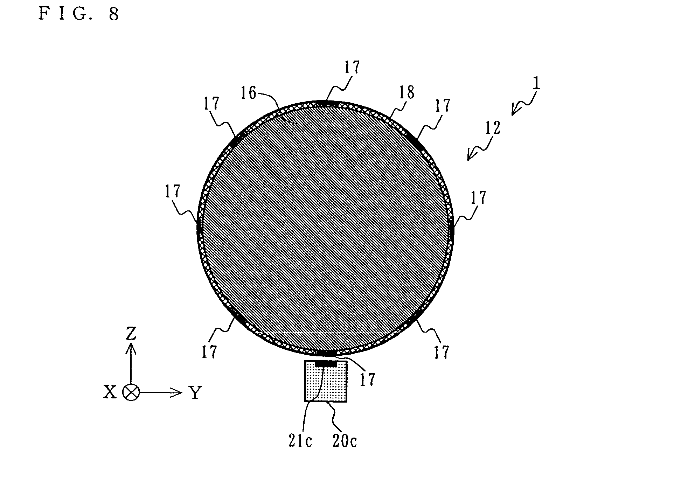

In the above description, each IC chip 17 is provided on an end surface of the movable magnetizable member 15. The present invention is not limited to this, and the IC chips 17 may be provided at any position on the surface layer 18 as shown in FIG. 8. In the case where the ball section 12 does not include the movable magnetizable member 15, as the total number of IC chips 17 increases, the controller 22 can trace more accurately the rotation direction and the rotation amount of the ball section 12 in accordance with the force applied by the user.

While the invention has been described in detail, the foregoing description is in all aspects illustrative and not restrictive. It is understood that numerous other modifications and variations can be devised without departing from the scope of the invention.

### INDUSTRIAL APPLICABILITY

A track ball device according to the present invention is applicable to a vehicle-mounted device or the like which is demanded to provide a technological effect of storing information in a ball.

## Claims

1. A track ball device, comprising:
a ball;
at least one non-contact IC chip built in the ball; and
a reader for reading information stored in the non-contact IC chip.

2. A track ball device according to claim 1, wherein the non-contact IC chip stores information capable of specifying a position of the non-contact IC chip itself.

3. A track ball device according to claim 1, wherein the non-contact IC chip stores information representing a feature of the ball.

## Amended claims

### Amended claims under Art. 19.1 PCT

1. A track ball device, comprising:
a ball;
at least one non-contact IC chip built in the ball; and
a reader for reading information stored in the non-contact IC chip;
wherein the information includes information on a feature of a surface of the ball.

2. A track ball device according to claim 1, wherein the non-contact IC chip stores information capable of specifying a position of the non-contact IC chip itself.

3. A track ball device according to claim 1, wherein the information on the feature of the surface of the ball represents a color.
